# EUROPEAN PATENT APPLICATION

(11) **EP 4 102 189 A1**
(43) Date of publication of application: **14.12.2022**
(21) Application number: 22178486.1
(22) Date of filing: 10.06.2022
(51) Int. Cl.: G01D 11/30, G01P 1/02

(54) **SENSING AXIS VARIABLE WHEEL SPEED SENSOR APPARATUS FOR AUTONOMOUS VEHICLE**

(30) Priority: 11.06.2021 KR 20210076339
(71) Applicant: ASENTEC Co., Ltd., Asan-si 31418 (KR)
(72) Inventor: LEE, Sung Jae, Cheonan-si, Chungcheongnam-do (KR); KIM, Nam Hyuk, Asan-si, Chungcheongnam-do (KR); KIM, Hyeong Seok, Asan-si, Chungcheongnam-do (KR)
(74) Representative: Lavialle, Bruno François Stéphane

(57) **Abstract**

Provided is a sensing axis variable wheel speed sensor apparatus for an autonomous vehicle, and more particularly, a sensing axis variable wheel speed sensor apparatus for an autonomous vehicle, which includes a plurality of sensors and in which the position of a sensing axis is selectively varied.

## Description

### CROSS-REFERENCE TO RELATED APPLICATION

This application is based on and claims priority under 35 U.S.C. §119 to Korean Patent Application No. 10-2021-0076339, filed on June 11, 2021, in the Korean Intellectual Property Office, the disclosure of which is incorporated by reference herein in its entirety.

### BACKGROUND

### 1. Field

The disclosure relates to a sensing axis variable wheel speed sensor apparatus for an autonomous vehicle, and more particularly, to a sensing axis variable wheel speed sensor apparatus for an autonomous vehicle, which includes a plurality of sensors and in which the position of a sensing axis is selectively varied.

### 2. Description of the Related Art

Wheel sensor apparatuses for a vehicle sense information about a rotational behavior of a wheel and transmit the information to a vehicle control apparatus.

In the case of wheel sensor apparatuses for a vehicle according to the related art, one wheel sensor apparatus includes only one sensor. Accordingly, when a defect or abnormality occurs in the sensor, a safety issue may occur.

To resolve this issue, a wheel sensor apparatus including two wheel sensors has been developed. However, such a newly developed sensor apparatus also has a configuration in which two sensors are both mounted in one sensor body. Accordingly, when any one sensor is defective, both sensors need to be discarded or replaced.

In addition, when a wheel sensor apparatus according to the related art is mounted in a vehicle, it is difficult to vary the position of a sensing axis, and thus, a separate device for enabling position adjustment of the sensing axis needs to be provided.

Accordingly, there is a need for a device capable of resolving this issue.

### [Prior Art Document]

### [Patent Document]

(Patent Document 1) Korean Patent Publication No. 10-2017-0117064

### SUMMARY

Provided is a sensing axis variable wheel speed sensor apparatus for an autonomous vehicle, which includes a plurality of sensors and in which the position of a sensing axis is selectively varied.

Additional aspects will be set forth in part in the description which follows and, in part, will be apparent from the description, or may be learned by practice of the presented embodiments of the disclosure.

According to an aspect of the disclosure, a wheel sensor apparatus includes a sensor module in which a sensor is mounted, a flange including a mounting hole and a fixing hole, and a fixing clip, wherein the sensor module includes a first sensor unit and a second sensor unit, the first sensor unit and the second sensor unit are capable of being separated from and coupled to each other, the mounting hole penetrates the flange in a front-rear direction, the fixing hole penetrates at least a portion of the flange in a direction crossing the penetration direction of the mounting hole, the sensor module is detachably inserted into the mounting hole, the fixing clip is detachably inserted into the fixing hole, and the fixing clip inserted into the fixing hole is configured to fix a position of the sensor module inserted into the mounting hole.

According to an embodiment, the sensor module may include a clip fixing portion into which the fixing clip is inserted, and the clip fixing portion may include a first clip groove, and a second clip groove arranged at a rear of the first clip groove, wherein, when the fixing clip is inserted into the fixing hole, the fixing clip may be inserted into the clip fixing portion, and when the fixing clip is inserted into the fixing hole in a state in which a front-rear direction position of the sensor module coupled to the flange is selectively varied with respect to the flange, the fixing clip may be selectively fitted into any one of the first clip groove and the second clip groove, such that the front-rear direction position of the sensor module coupled to the flange may be selectively varied with respect to the flange.

According to an embodiment, the flange may include a first body constituting one side of the flange, and a second body constituting the other side of the flange and having the mounting hole and the fixing hole formed therein, the second body may include panels that are apart from each other by a certain distance in the front-rear direction, the fixing hole may be configured as a space between the panels, and the fixing clip may be inserted into the fixing hole from an outer side of the flange in a lateral direction.

According to an embodiment, the sensor module may include a guide portion formed on at least one side thereof and extending in the front-rear direction, and the flange may include a guide line formed on at least one side of the mounting hole, corresponding to the guide portion, and extending in the front-rear direction.

According to an embodiment, the first sensor unit and the second sensor unit may each include an integrated circuit (IC) chip in which a sensor is mounted, an insert in which the IC chip is mounted, and a cable connected to the IC chip and configured to transmit an output signal generated by the IC chip to outside.

According to an embodiment, a signal generated by the first sensor unit and a signal generated by the second sensor unit may be independent of each other.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a perspective view showing the exterior of a sensing axis variable wheel speed sensor apparatus for an autonomous vehicle according to an embodiment;
FIG. 2 is a perspective view showing the exterior of a sensor module of a sensing axis variable wheel speed sensor apparatus for an autonomous vehicle, according to an embodiment;
FIGS. 3, 4, and 5 are perspective views showing, in different directions, the exterior of a first sensor unit constituting a sensor module of a sensing axis variable wheel speed sensor apparatus for an autonomous vehicle, according to an embodiment;
FIG. 6 is a perspective view showing the exterior of a second sensor unit constituting a sensor module of a sensing axis variable wheel speed sensor apparatus for an autonomous vehicle, according to an embodiment;
FIG. 7 is a perspective view showing an internal structure of a first sensor unit constituting a sensor module of a sensing axis variable wheel speed sensor apparatus for an autonomous vehicle, according to an embodiment;
FIGS. 8 and 9 are respectively a perspective view and a top view showing, in different directions, a flange of a sensing axis variable wheel speed sensor apparatus for an autonomous vehicle, according to an embodiment, and FIG. 10 is a perspective view showing a cross-sectional structure of the flange;
FIG. 11 is a perspective view of a fixing clip of a sensing axis variable wheel speed sensor apparatus for an autonomous vehicle, according to an embodiment; and
FIGS. 12 to 14 are perspective views showing a fixing structure of a sensor module, a flange, and a fixing clip of a sensing axis variable wheel speed sensor apparatus for an autonomous vehicle, according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

Hereinafter, embodiments according to the disclosure will be described with reference to the accompanying drawings.

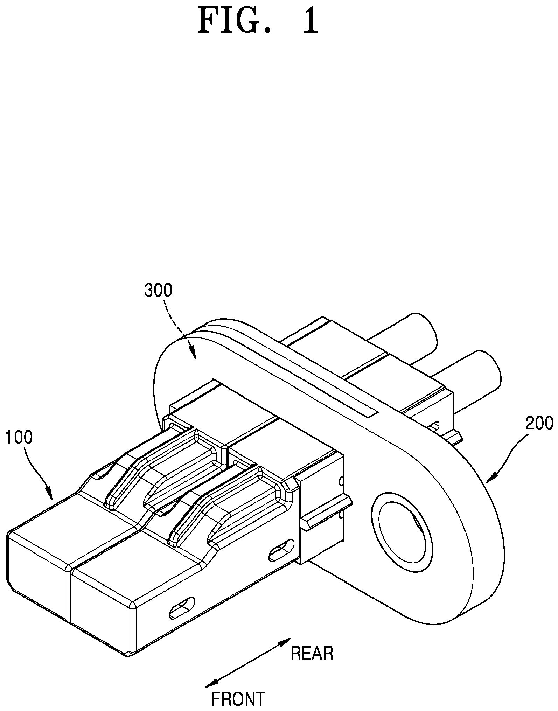

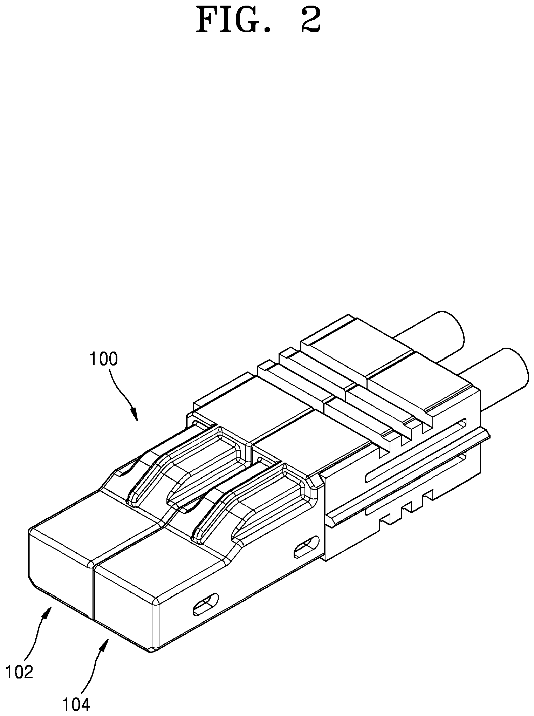

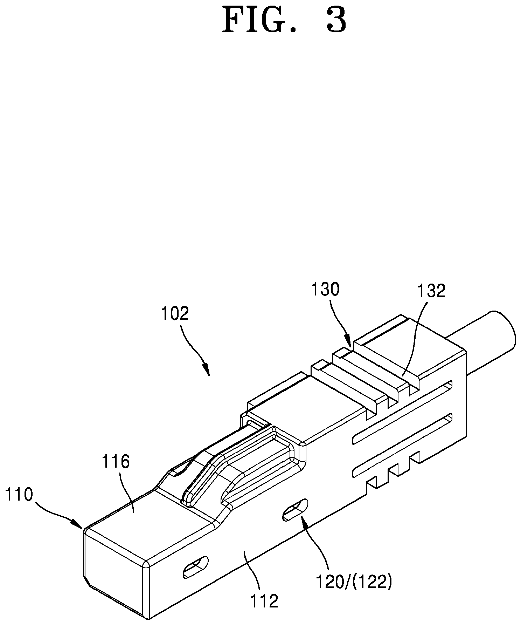

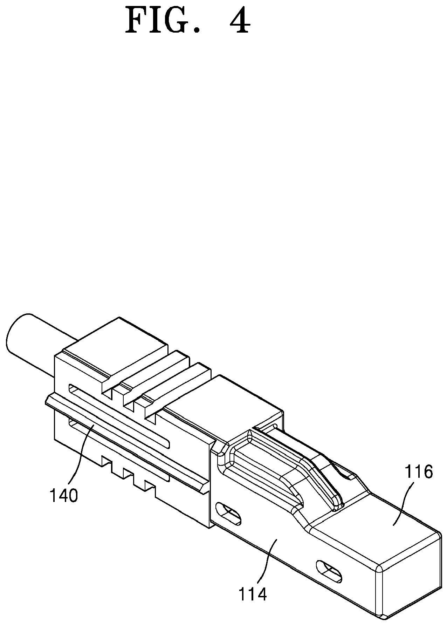

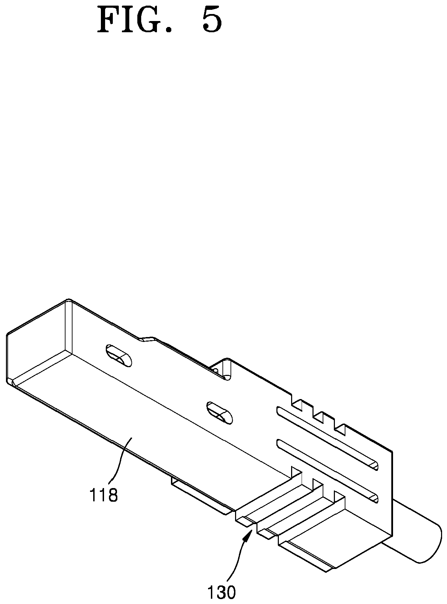

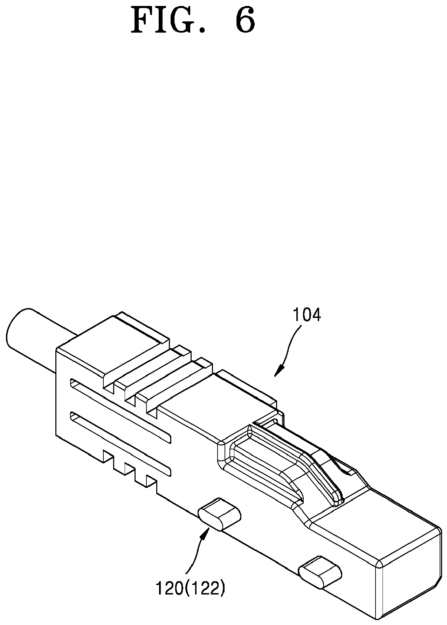

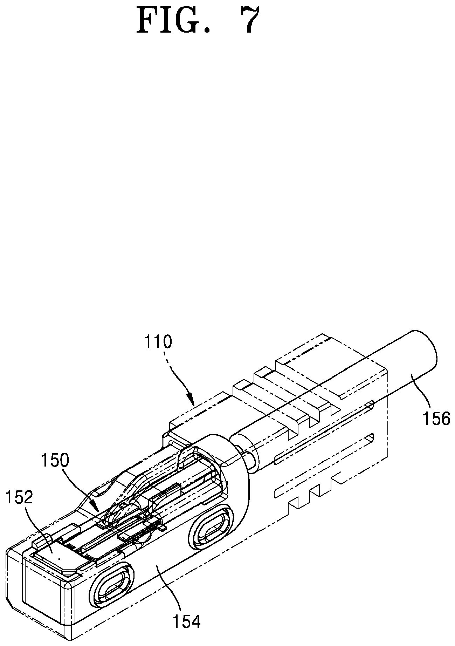

FIG. 1 is a perspective view showing the exterior of a sensing axis variable wheel speed sensor apparatus 1 for an autonomous vehicle according to an embodiment. FIG. 2 is a perspective view showing the exterior of a sensor module 100 of the sensing axis variable wheel speed sensor apparatus 1 for an autonomous vehicle, according to an embodiment. FIGS. 3, 4, and 5 are perspective views showing, in different directions, the exterior of a first sensor unit 102 constituting the sensor module 100 of the sensing axis variable wheel speed sensor apparatus 1 for an autonomous vehicle, according to an embodiment. FIG. 6 is a perspective view showing the exterior of a second sensor unit 104 constituting the sensor module 100 of the sensing axis variable wheel speed sensor apparatus 1 for an autonomous vehicle, according to an embodiment. FIG. 7 is a perspective view showing an internal structure of the first sensor unit 102 constituting the sensor module 100 of the sensing axis variable wheel speed sensor apparatus 1 for an autonomous vehicle, according to an embodiment.

In the following description, the terms "front" and "rear" indicating directions are based on directions shown in FIG. 1.

The sensing axis variable wheel speed sensor apparatus 1 for an autonomous vehicle according to an embodiment includes the sensor module 100, a flange 200, and a fixing clip 300.

The sensor module 100 is a device in which a sensor is mounted.

The sensor module 100 includes the first sensor unit 102 in which a first wheel sensor is mounted, and the second sensor unit 104 in which a second wheel sensor is mounted. The first sensor unit 102 and the second sensor unit 104 have configurations that may be separated from and coupled to each other.

The first sensor unit 102 and the second sensor unit 104 have configurations corresponding to each other. Accordingly, the following description of a sensor unit may be commonly applied to the first sensor unit 102 and the second sensor unit 104.

The first sensor unit 102 includes a unit body 110 constituting the exterior thereof. In the unit body 110, an integrated circuit (IC) chip 152 in which a sensor is mounted, an insert 154 in which the IC chip 152 is mounted, and a cable 156 which is connected to the IC chip 152, and through which a signal is transmitted to the outside may be arranged. A material constituting the unit body 110 may be molded outside a module 150 including the IC chip 152, the insert 154, and the cable 156.

According to an embodiment, as the insert 154 of the first sensor unit 102 may include a groove and the insert 154 of the second sensor unit 104 may include a protrusion, the first sensor unit 102 and the second sensor unit 104 may have a male/female structure, so as to be separated from and coupled to each other. However, the disclosure is not limited thereto.

The unit body 110 may have an overall hexahedral shape. Accordingly, the unit body 110 may include, in addition to a front surface at a front thereof and a rear surface at a rear thereof, a first side surface 112, a second side surface 114, an upper surface 116, and a lower surface 118, which constitute a perimeter side thereof.

The unit body 110 includes a connection fixing portion 120, a clip fixing portion 130, and a guide portion 140.

The connection fixing portion 120 is capable of fixing the first sensor unit 102 to the second sensor unit 104. For example, as shown in the drawings, the first sensor unit 102 may include a fixing groove 122, and the second sensor unit 104 may include a fixing protrusion 124 which may be inserted into the fixing groove 122. However, the disclosure is not limited thereto. In addition, as described above, the connection fixing portion 120 may be included in the insert 154 mounted in the unit body 110. However, the disclosure is not limited thereto.

The clip fixing portion 130 is a unit into which the fixing clip 300 may be inserted.

The clip fixing portion 130 may include a clip groove. According to an embodiment, the clip groove may be formed in at least one portion of an upper portion and a lower portion of the unit body 110. However, the disclosure is not limited thereto.

A plurality of clip grooves may be provided, and the clip grooves may be arranged at different positions. For example, the clip fixing portion 130 may include a first clip groove 132 and a second clip groove 134 arranged at a rear of the first clip groove 132. The number of clip grooves is not limited, and as shown in the drawings, three clip grooves may be provided. However, this is merely an embodiment.

The guide portion 140 may be provided on at least one side of the unit body 110. For example, the guide portion 140 may be provided on the left side of the first sensor unit 102, and the guide portion 140 may be provided on the right side of the second sensor unit 104. However, the disclosure is not limited thereto.

The guide portion 140 may be, for example, a protrusion protruding laterally and extending in a front-rear direction. Conversely, the guide portion 140 may be, for example, a groove recessed laterally and extending in the front-rear direction.

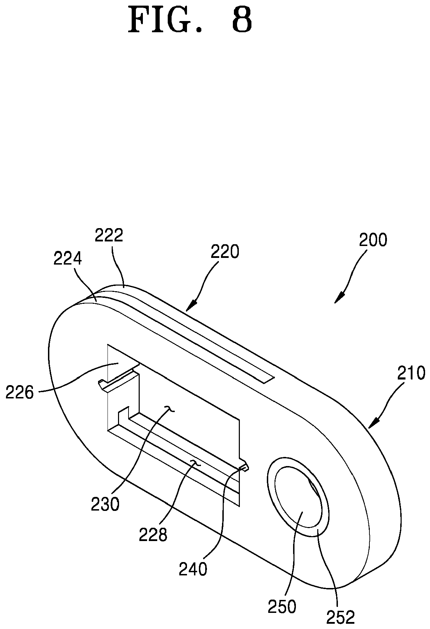

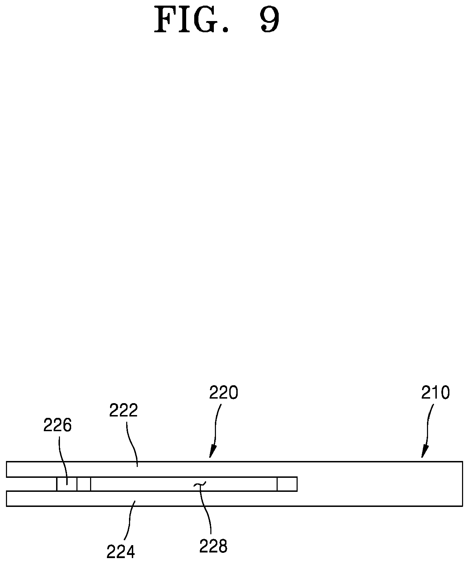

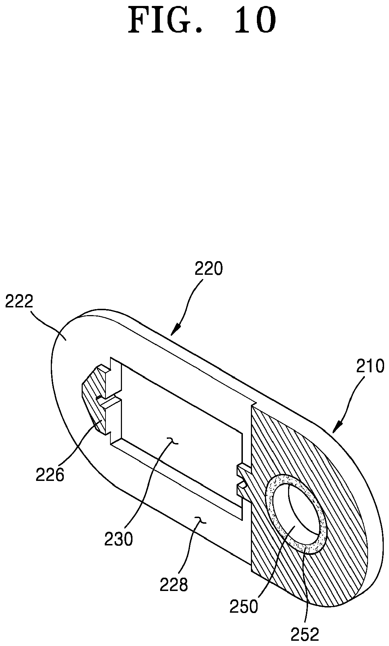

FIGS. 8 and 9 are respectively a perspective view and a top view showing, in different directions, the flange 200 of the sensing axis variable wheel speed sensor apparatus 1 for an autonomous vehicle, according to an embodiment, and FIG. 10 is a perspective view showing a cross-sectional structure of the flange 200.

The flange 200 includes a mounting hole 230 and a fixing hole 228.

The mounting hole 230 penetrates the flange 200 in the front-rear direction. The fixing hole 228 penetrates at least a portion of the flange 200 in a direction crossing the penetration direction of the mounting hole 230 (e.g., a vertical direction or a left-right direction).

In detail, the flange 200 includes a first body 210 and a second body 220. The first body 210 is a portion constituting one side of the flange 200. The second body 220 is a portion which constitutes the other side of the flange 200, and in which the mounting hole 230 and the fixing hole 228 are formed.

The first body 210 may include a bush 250. The bush 250 may include a bush hole 252. The flange 200 may be connected and fixed to an external device (e.g., a wheel sensor mounting portion of a vehicle, etc.) through the bush 250.

The second body 220 includes panels that are apart from each other by a certain distance in the front-rear direction. The panels may include a front panel 222 and a rear panel 224. Because the front panel 222 and the rear panel 224 are apart from each other in the front-rear direction, a space is formed between the front panel 222 and the rear panel 224. The space constitutes the fixing hole 228 into which the fixing clip 300 may be inserted. In addition, the mounting hole 230 includes a hole penetrating the front panel 222 and the rear panel 224 constituting the second body 220 in the front-rear direction.

In addition, the second body 220 may include a connection portion 226 connecting between the panels in the front-rear direction. The connection portion 226 may be arranged at one side of the mounting hole 230.

A guide line 240 may be formed on at least one side of an outer periphery of the mounting hole 230. The guide line 240 is a component corresponding to the guide portion 140 included in the sensor module 100. For example, when the guide portion 140 is configured as a protrusion, the guide line 240 may be a groove portion extending in the front-rear direction. Conversely, when the guide portion 140 is configured as a groove portion, the guide line 240 may be a protrusion extending in the front-rear direction and protruding inward.

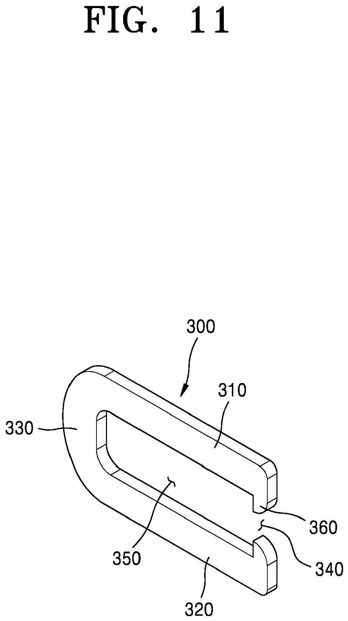

FIG. 11 is a perspective view of the fixing clip 300 of the sensing axis variable wheel speed sensor apparatus 1 for an autonomous vehicle, according to an embodiment.

The fixing clip 300 is a unit for fixing the position of the sensor module 100 to the flange 200.

According to an embodiment, the fixing clip 300 may include, for example, clip arms 310 and 320 parallel to each other, and a link 330 provided on one end side of the clip arms 310 and 320 and connecting between the clip arms 310 and 320. The other end side of each of the clip arms 310 and 320 is open with an open portion 340, and the clip arms 310 and 320 are apart from each other such that a clip space 350 is formed therebetween. A hook 360 for fixing may be provided at the other end side of the clip arms 310 and 320.

However, this is merely an embodiment, and the configuration of the fixing clip 300 is not limited thereto.

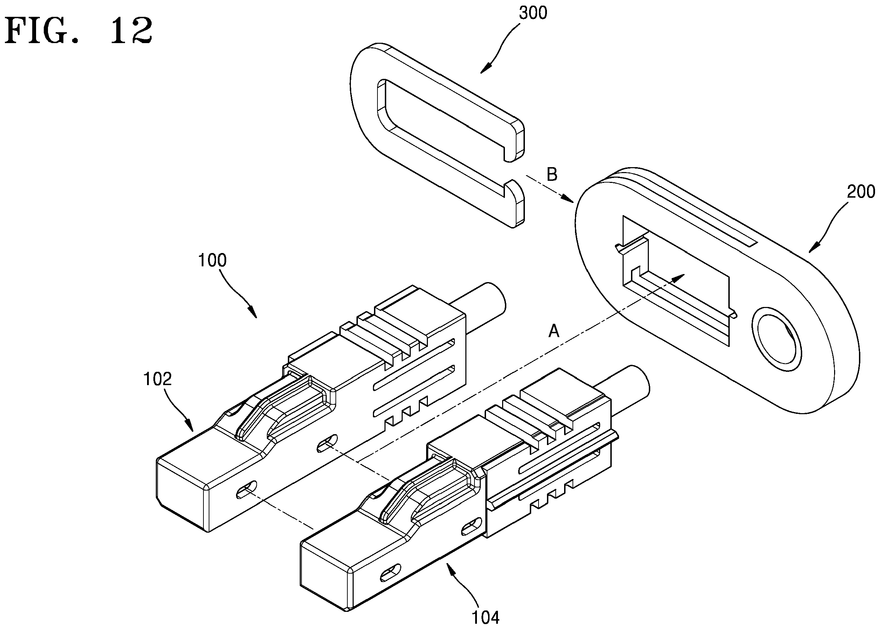

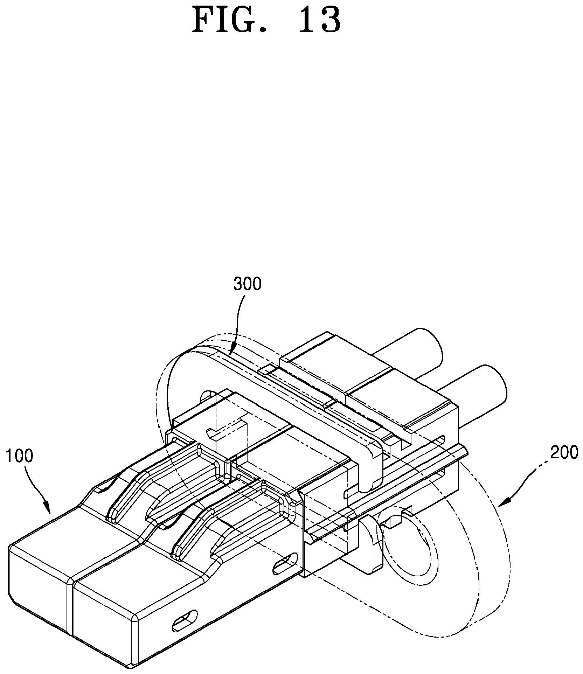

FIGS. 12 to 14 are perspective views showing a fixing structure of the sensor module 100, the flange 200, and the fixing clip 300 of the sensing axis variable wheel speed sensor apparatus 1 for an autonomous vehicle, according to an embodiment.

Hereinafter, a coupling relationship of the sensor module 100 according to an embodiment will be described.

First, as indicated by arrow A, the first sensor unit 102 and the second sensor unit 104 constituting the sensor module 100 are coupled to each other to configure the sensor module 100. The sensor module 100 is inserted into the mounting hole 230 of the flange 200.

In this regard, the coupling of the first sensor unit 102 and the second sensor unit 104 may be achieved by the connection fixing portion 120 described above. That is, the fixing protrusion 124 included in the second sensor unit 104 may be fitted into the fixing groove 122 included in the first sensor unit 102. Accordingly, the first sensor unit 102 is coupled to the second sensor unit 104, thereby configuring one sensor module 100.

Next, the sensor module 100 is inserted into the mounting hole 230 of the flange 200.

When the sensor module 100 is inserted into the mounting hole 230 of the flange 200, the guide portion 140 of the sensor module 100 and the guide line 240 of the flange 200 come into contact with each other. Accordingly, the insertion of the sensor module 100 in the front-rear direction may be guided by the guide portion 140 and the guide line 240.

When the sensor module 100 is inserted into the mounting hole 230 of the flange 200, a front-rear direction position of the sensor module 100 coupled to the flange 200 may be appropriately selected with respect to the flange 200. That is, in a state in which the position of the flange 200 is fixed, a width at which the sensor module 100 protrudes forward or rearward of the flange 200 may be selected. Accordingly, the front-rear direction position of the sensor module 100 coupled to the flange 200 may be selectively varied with respect to the flange 200.

Next, the fixing clip 300 is inserted into the fixing hole 228.

The fixing clip 300 is inserted into the fixing hole 228 from the outer side of the flange 200 in a lateral direction, as indicated by arrow B.

As shown in FIG. 11, when the fixing clip 300 is inserted into the fixing hole 228, the fixing clip 300 is inserted into the clip fixing portion 130 included in the sensor module 100.

When the front-rear direction position of the sensor module 100 coupled to the flange 200 is varied with respect to the flange 200, the fixing clip 300 may be selectively fitted into any one of the first clip groove 132 and the second clip groove 134.

For example, when the fixing clip 300 is inserted into the fixing hole 228 in a state in which the fixing hole 228 overlaps the first clip groove 132, the fixing clip 300 is fitted into the first clip groove 132. In this case, the sensor module 100 is arranged relatively rearward. Accordingly, the first sensor unit 102 and the second sensor unit 104 mounted in the sensor module 100 are also arranged relatively rearward.

As another example, when the fixing clip 300 is inserted into the fixing hole 228 in a state in which the fixing hole 228 overlaps the second clip groove 134, the fixing clip 300 is fitted into the second clip groove 134. In this case, the sensor module 100 is arranged relatively forward. Accordingly, the first sensor unit 102 and the second sensor unit 104 mounted in the sensor module 100 are also arranged relatively forward.

Hereinafter, the operation and effects of the disclosure will be described.

The sensing axis variable wheel speed sensor apparatus 1 for an autonomous vehicle according to an embodiment of the disclosure may be mounted on a wheel sensor mounting portion of a certain vehicle.

A signal generated by the first sensor unit 102 and a signal generated by the second sensor unit 104 are independent of each other. That is, a signal generated by a sensor in the IC chip 152 of the first sensor unit 102 and a signal generated by a sensor in the IC chip 152 of the second sensor unit 104 do not affect each other. Accordingly, even when a sensor in one sensor unit is defective or malfunctions, a sensor in the other sensor unit may generate a signal.

According to the disclosure, it is possible to adjust a sensing axis of a wheel sensor for an autonomous vehicle. Accordingly, a distance between a mounting portion and a sensor of the wheel sensor may be appropriately selected according to the type and grade of a vehicle.

According to the related art, the position of a mounting portion of a wheel sensor varies according to the type and grade of a vehicle, and accordingly, the position of the wheel sensor may be varied. To resolve this issue, a separate mounting unit or connection unit is needed.

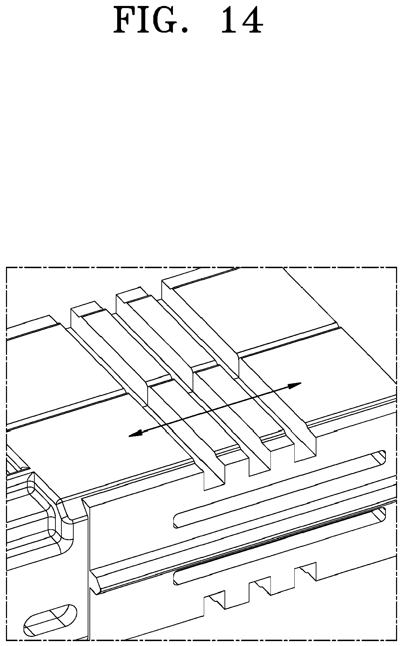

However, according to the disclosure, when the flange 200 is mounted on a wheel sensor mounting portion of a vehicle, the position of the sensor module 100 may be selectively varied in the front-rear direction, as shown in FIG. 14. Accordingly, even without a separate unit capable of changing the position of a sensor, the wheel sensor may be arranged at an optimal position by adjusting the position of the sensing axis, according to vehicle specifications. Accordingly, costs for mounting the wheel sensor may be reduced.

In addition, according to the disclosure, a wheel sensor having a redundancy structure may be implemented. That is, the sensor module 100 according to an embodiment of the disclosure includes the first sensor unit 102 and the second sensor unit 104. The first sensor unit 102 and the second sensor unit 104 may each include a separate sensor, and may each generate an independent signal. Accordingly, even when a signal generated by one of the sensors is defective or a signal is not generated, the other sensor may generate a signal. Accordingly, a signal satisfying a functional safety standard (ISO 26262) may be smoothly generated and transmitted. Accordingly, the wheel sensor as described above may particularly function as a wheel sensor apparatus for an autonomous vehicle.

In addition, the first sensor unit 102 and the second sensor unit 104 constituting the sensor module 100 may be selectively separated from and coupled to each other. In addition, the first sensor unit 102 and the second sensor unit 104 may be separated from and coupled to the flange 200. Accordingly, when one sensor unit is defective, the sensor unit may be easily replaced. Accordingly, when a defect occurs, only the sensor unit that needs to be replaced may be separated and replaced, thereby reducing manufacturing costs. In addition, inspection costs may be reduced when a defect occurs during use.

According to a sensing axis variable wheel speed sensor apparatus for an autonomous vehicle according to an embodiment of the disclosure, it is possible to adjust a sensing axis of a wheel sensor for an autonomous vehicle. Accordingly, a distance between a mounting portion and a sensor of the wheel sensor may be appropriately selected according to the type and grade of a vehicle.

According to the related art, the position of a mounting portion of a wheel sensor varies according to the type and grade of a vehicle, and accordingly, the position at which the wheel sensor is mounted may be varied. To resolve this issue, a separate sensor mounting unit or sensor connection unit is needed.

However, according to the disclosure, the position of the wheel sensor may be selectively varied. Accordingly, even without a separate unit capable of changing the position of a sensor, the wheel sensor may be arranged at an optimal position according to vehicle specifications. Accordingly, costs for mounting the wheel sensor may be reduced.

In addition, according to the disclosure, a wheel sensor having a redundancy structure may be implemented. That is, a sensor module according to an embodiment of the disclosure includes a first sensor unit and a second sensor unit. The first sensor unit and the second sensor unit may include a first wheel sensor and a second wheel sensor, respectively, and may each generate an independent signal. Accordingly, even when a signal generated by any one sensor of the first wheel sensor and the second wheel sensor is defective or a signal is not generated, the other sensor may generate a signal. Accordingly, a signal satisfying a functional safety standard (ISO 26262) may be generated and transmitted to an external device. The wheel sensor as described above may be particularly suitable for an autonomous vehicle.

In addition, because the first sensor unit and the second sensor unit constituting the sensor module may be selectively separated from and coupled to each other and also be separated from and coupled to a flange, when one sensor unit is defective, the sensor unit may be easily replaced. Accordingly, when a defect occurs, only the sensor unit that needs to be replaced may be separated and replaced, thereby reducing manufacturing costs. In addition, inspection costs may be reduced when a defect occurs during use.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A sensing axis variable wheel speed sensor apparatus for an autonomous vehicle, the apparatus comprising:
a sensor module in which a sensor is mounted;
a flange comprising a mounting hole and a fixing hole; and
a fixing clip,
wherein the sensor module comprises a first sensor unit and a second sensor unit, each having a sensor mounted therein,
the first sensor unit and the second sensor unit are capable of being separated from and coupled to each other,
the mounting hole penetrates the flange in a front-rear direction,
the fixing hole penetrates at least a portion of the flange in a direction crossing the penetration direction of the mounting hole,
the sensor module is detachably inserted into the mounting hole,
the fixing clip is detachably inserted into the fixing hole, and
the fixing clip inserted into the fixing hole is configured to fix a position of the sensor module inserted into the mounting hole.

2. The apparatus of claim 1, wherein the sensor module comprises a clip fixing portion into which the fixing clip is inserted, and
the clip fixing portion comprises:
a first clip groove; and
a second clip groove arranged at a rear of the first clip groove, wherein, in a case where the fixing clip is inserted into the fixing hole, the fixing clip is inserted into the clip fixing portion, and
in a case where the fixing clip is inserted into the fixing hole in a state in which a front-rear direction position of the sensor module coupled to the flange is selectively varied with respect to the flange, the fixing clip is selectively fitted into any one of the first clip groove and the second clip groove, such that the front-rear direction position of the sensor module coupled to the flange is selectively varied with respect to the flange.

3. The apparatus of claim 1, wherein the flange comprises:
a first body constituting one side of the flange; and
a second body constituting the other side of the flange and having the mounting hole and the fixing hole formed therein,
the second body comprises panels that are apart from each other by a certain distance in the front-rear direction,
the fixing hole is configured as a space between the panels, and
the fixing clip is inserted into the fixing hole from an outer side of the flange in a lateral direction.

4. The apparatus of claim 1, wherein the sensor module comprises a guide portion formed on at least one side thereof and extending in the front-rear direction, and
the flange comprises a guide line formed on at least one side of the mounting hole, corresponding to the guide portion, and extending in the front-rear direction.

5. The apparatus of claim 1, wherein the first sensor unit and the second sensor unit each comprise an integrated circuit (IC) chip in which a sensor is mounted, an insert in which the IC chip is mounted, and a cable connected to the IC chip and configured to transmit an output signal generated by the IC chip to outside.

6. The apparatus of claim 1, wherein a signal generated by the first sensor unit and a signal generated by the second sensor unit are independent of each other.
